# FASCICULE DE BREVET EUROPEEN

(11) **EP 3 271 983 B1**
(45) Date de publication et mention de la délivrance du brevet: **17.02.2021**
(21) Numéro de dépôt: 16715020.0
(22) Date de dépôt: 16.03.2016
(51) Int. Cl.: H02G 11/02

(54) **DEVIDOIR POUR CABLE ELECTRIQUE**
SPULE FÜR STROMKABEL
REEL FOR ELECTRIC CABLE

(30) Priorité: 17.03.2015 FR 1552199
(43) Date de publication de la demande: 24.01.2018
(73) Titulaire: Commissariat à l'énergie atomique et aux énergies alternatives, 75015 Paris (FR); Renault S.A.S., 92100 Boulogne-Billancourt (FR)
(72) Inventeur: CHATROUX, Daniel, 38470 Teche (FR); GUILLERMIN, Olivier, 69780 Toussieu (FR); GAILLARD, Frédéric, 38500 Voiron (FR); MERMIN, Daniel, 38360 Sassenage (FR); DUPONT, Jérémy, 38300 Bourgoin-jallieu (FR)
(74) Mandataire: Cabinet Beaumont
(86) Numéro de dépôt international: PCT/FR2016/050590
(87) Numéro de publication internationale: WO 2016/146949

(56) Documents cités:
- CN-Y- 201 181 832
- FR-A- 407 850
- FR-A1- 2 964 805
- GB-A- 2 152 476
- JP-A- 2014 230 298
- US-B1- 6 216 834

## Description

### Domaine

La présente description concerne de façon générale des systèmes de raccordement électrique. La présente description concerne plus particulièrement un dispositif de rangement ou dévidoir d'un câble électrique et s'applique plus particulièrement à un système de raccordement électrique de recharge d'une batterie de véhicule automobile ou similaire.

### Exposé de l'art antérieur

La recharge de la ou des batteries d'un véhicule automobile s'effectue généralement en raccordant un chargeur de batteries contenu dans le véhicule à une source d'énergie électrique, par exemple un réseau de distribution d'électricité ou une installation photovoltaïque. Pour cela, un câble relie le chargeur à une station de recharge alimentée en électricité.

Lorsque le câble n'est pas utilisé, c'est-à-dire qu'il ne raccorde aucun chargeur au réseau, il a besoin d'être rangé. Pour cela, on prévoit habituellement soit un enrouleur de câble, soit un coffre dans lequel le câble est mis en vrac ou lové à la main, que ce soit côté véhicule ou côté station de recharge.

Le document FR-A-2964805 décrit un dispositif d'enroulement d'un câble électrique destiné à être logé dans un véhicule et comportant des poulies guidant le câble le long d'un chemin en zigzag. Les poulies sont disposées dans le boîtier. Les deux rangées sont placées parallèlement l'une de l'autre. Les poulies de la rangée du haut ou des deux rangées sont mobiles en translation. Chaque poulie est mobile en translation individuellement et est associée à un ressort de rappel vers sa position écartée des poulies de l'autre rangée. Les poulies sont toutes dans un même plan. Le document JP 2014/230298 A divulgue un dispositif de rangement d'un câble électrique comportant un système de ressort.

Il existe un besoin d'amélioration des dispositifs de rangement de câble électrique, notamment pour des systèmes de raccordement électrique appliqués à la recharge de véhicules électriques.

### Résumé

Un mode de réalisation vise à pallier tout ou partie des inconvénients des dispositifs actuels de rangement de câble électrique.

Un mode de réalisation vise à pallier tout ou partie des inconvénients des systèmes actuels de raccordement électrique pour la recharge de véhicules électriques.

Un mode de réalisation propose une solution particulièrement adaptée à une borne de recharge fixe.

Un mode de réalisation propose un système particulièrement adapté au rangement d'un câble de plusieurs mètres.

Un mode de réalisation propose un système particulièrement simple d'emploi.

Un mode de réalisation propose un système automatique ne requérant aucun apport d'énergie externe au système pour le rangement du câble.

Ainsi, un mode de réalisation prévoit un dispositif de rangement pour câble électrique, comportant au moins trois poulies, réparties en deux rangées, respectivement haute et basse, la rangée basse étant mobile en translation avec un angle par rapport à la verticale inférieur à 45 degrés ; et
un chapelet d'éléments relié à la rangée basse et exerçant une force de retenue croissante avec l'allongement du câble et une force de retour décroissante au fur et à mesure du rangement du câble.

Selon l'invention, lesdits éléments sont des ressorts ayant des duretés différentes, reliés en chapelet.

Selon un mode de réalisation, le mouvement de translation est approximativement vertical, de préférence vertical.

Selon un mode de réalisation, le mouvement de translation est rectiligne.

Selon un mode de réalisation, les poulies de chaque rangée sont coaxiales et mobiles en rotation individuellement.

Selon un mode de réalisation, chaque rangée comporte un axe commun aux poulies de la rangée concernée.

Selon un mode de réalisation, le dispositif comporte un boîtier dans lequel sont logées les rangées de poulies, la rangée de poulies basse coulissant verticalement dans le boîtier.

Selon un mode de réalisation, la rangée basse est liée à un fond du boîtier par lesdits ressorts.

Selon un mode de réalisation, la rangée haute et/ou le dispositif entier pivotent autour d'un axe vertical.

Selon un mode de réalisation, le câble est un câble de recharge de batterie d'un véhicule électrique.

Un mode de réalisation prévoit un système de raccordement électrique, comportant :
un câble électrique ; et
un dispositif de rangement du câble.

Selon un mode de réalisation, le câble passe successivement d'une poulie d'une rangée à une poulie de l'autre rangée.

Selon un mode de réalisation :
une première extrémité du câble est fixe par rapport au dispositif de rangement ; et
une seconde extrémité du câble est libre et sort du boîtier du dispositif de rangement par une ouverture.

Selon un mode de réalisation, chaque poulie comporte une gorge périphérique externe d'une largeur supérieure au diamètre extérieur du câble.

Selon un mode de réalisation, le câble a une longueur comprise entre environ 4 et environ 9 mètres et une section comprise entre environ 0,5 et environ 1,5 cm2.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
les figures 1A et 1B représentent, de façon très schématique, un mode de réalisation d'un système de raccordement électrique pour la charge d'une batterie d'un véhicule automobile et un tel véhicule, respectivement câble déployé et câble rangé ;
la figure 2 est une vue schématique et fonctionnelle d'un mode de réalisation d'un dispositif de rangement du câble du système de raccordement électrique ;
les figures 3A et 3B sont des vues schématiques illustrant le fonctionnement du système de raccordement électrique de la figure 2 ;
la figure 4 est une vue en perspective schématique d'un mode de réalisation d'un système de raccordement dans un exemple d'environnement ;
la figure 5 représente, partiellement, un détail d'un autre mode de réalisation ;
la figure 6 illustre une variante de réalisation du dispositif de rangement ;
la figure 7 illustre une autre variante de réalisation du dispositif de rangement ;
les figures 8A et 8B sont des coupes schématique d'un mode de réalisation d'un lest du dispositif de rangement ;
la figure 9 illustre, de façon schématique, une autre variante de réalisation ; et
la figure 10 illustre, de façon très schématique, un mode de réalisation d'un chapelet d'éléments de retenue et de retour.

### Description détaillée

De mêmes éléments ont été désignés par de mêmes références aux différentes figures. Par souci de clarté, seuls les éléments qui sont utiles à la compréhension des modes de réalisation décrits ont été représentés et seront détaillés. En particulier, la gestion de la recharge d'une batterie de véhicule n'a pas été détaillée, les modes de réalisation décrits étant compatibles avec les solutions usuelles. De plus, la réalisation du câble électrique lui-même n'a pas été détaillée, les modes de réalisation décrits étant, là encore, compatibles avec les câbles usuels.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence à l'orientation des figures ou à un système de raccordement dans une position normale d'utilisation. Sauf précision contraire, les expressions "approximativement", "sensiblement" et "de l'ordre de" signifient à 10 % près ou 10° près, de préférence à 5 % ou 5° près.

La présente description fait référence à un exemple d'application au rangement d'un câble électrique destiné à la charge d'un véhicule électrique. Toutefois, on notera que les modes de réalisation qui vont être décrits s'appliquent plus généralement au rangement de tout câble électrique pour lequel des problèmes similaires se posent.

Les modes de réalisation décrits s'appliquent à la réalisation d'un dispositif de rangement côté installation de fourniture d'énergie, c'est-à-dire, côté station de recharge, que ce soit dans un espace public ou au domicile de l'utilisateur.

Parmi les contraintes engendrées par l'application à la recharge d'un véhicule électrique, on note :
une grande longueur de câble, c'est-à-dire d'une longueur pouvant atteindre une dizaine de mètres, qui engendre un poids non négligeable pour le câble, ce qui habituellement pose des problèmes à l'utilisateur ;
un souhait de recharge dite rapide, c'est-à-dire avec un courant de plusieurs dizaines d'ampères, requérant une section de conducteurs de plusieurs millimètres carrés (typiquement de l'ordre de 6 mm2), et participant à accroitre le poids du câble ;
un besoin de ranger le câble d'une façon telle qu'il ne s'emmêle pas afin de faciliter ses utilisations ultérieures ;
un besoin d'un système de faible encombrement.

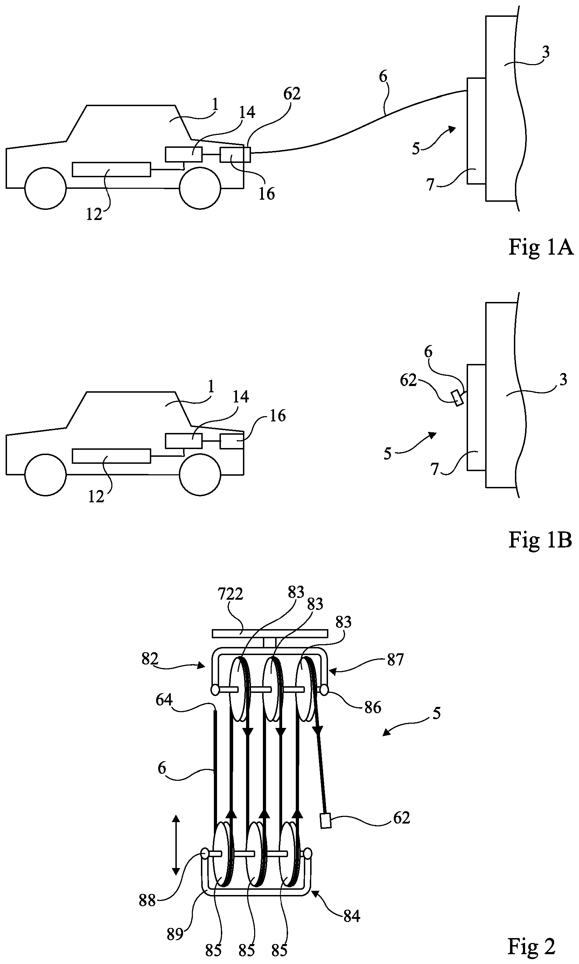

Les figures 1A et 1B représentent, de façon très schématique, un mode de réalisation d'un système de raccordement électrique pour la charge d'une batterie d'un véhicule automobile et un tel véhicule, respectivement câble déployé et câble rangé.

Un véhicule électrique ou hybride 1 comporte une ou plusieurs batteries 12 destinées à lui fournir l'énergie nécessaire à sa propulsion. Ces batteries 12 sont reliées à un ou plusieurs dispositifs 14 de gestion de charge et de commande (chargeurs) destinés à contrôler la charge des batteries lorsqu'elles sont branchées à une installation 3 de fourniture d'électricité. L'installation 3 peut être une borne de recharge publique de type station-service, une installation domestique (par exemple au domicile de l'utilisateur du véhicule), etc.

Côté installation 3, on prévoit un système 5 de raccordement électrique de la source d'énergie au chargeur 14 du véhicule 1. Le système de raccordement 5 comporte un câble électrique 6 et un dispositif 7 de rangement du câble. Une première extrémité (non visible aux figures 1A et 1B) du câble est branchée, en pratique à demeure, à l'installation 3. Une seconde extrémité (libre) du câble 6 se termine par une fiche (ou prise) 62 de raccordement à une prise (ou fiche) 16 côté chargeur 14.

Lors d'une recharge du véhicule 1 (figure 1A), le câble 6 est étiré et sorti, au moins partiellement, du dispositif 7. Entre deux recharges (figure 1B), le câble 6 est rangé dans le dispositif 7.

La figure 2 est une vue schématique et fonctionnelle d'un mode de réalisation d'un système 5 de raccordement électrique illustrant l'intérieur du dispositif 7 de rangement du câble 6.

Dans ce mode de réalisation, le dispositif 7 comporte :
un boîtier (seule une paroi supérieure 722 du boîtier est visible en figure 2) destiné à loger le câble 6 lorsque ce dernier doit être rangé ; et
deux rangées, respectivement haute 82 et basse 84, de poulies 83 et 85 de guidage du câble 6 en zigzag dans le boîtier.

Les poulies 83 et 85 sont toute mobiles en rotation. Les deux rangées 82 et 84 sont parallèles et approximativement horizontales, de préférence horizontales. La rangée haute 82 est dans une position verticale fixe par rapport au boîtier, c'est-à-dire que la hauteur de l'axe 86 (ou des axes) des poulies 83 est fixe par rapport au boîtier. La rangée basse 84 est mobile en translation verticalement, c'est-à-dire que la position de l'axe 88 (ou des axes) des poulies 85 est mobile verticalement.

Dans l'exemple de la figure 2, les poulies 83 sont montées sur un axe 86 commun autour duquel elles sont individuellement libres en rotation et les poulies 85 sont montées sur un axe 88 commun autour duquel elles sont individuellement libres en rotation. Les axes 86 et 88 sont chacun portés par un étrier 87, respectivement 89. L'étrier haut 87 est fixé au boîtier (par exemple à sa paroi supérieure 722) tandis que l'étrier 89 est libre en translation verticale dans le boîtier.

Une extrémité 64 du câble 6, opposée à celle recevant la fiche 62, est fixe et raccordée à l'installation 3 de fourniture d'électricité (non visible en figure 2). Depuis cette extrémité 64, le câble 6 suit un parcours en zigzag d'une poulie de la rangée basse 84 à une poulie de la rangée haute 82 et inversement. Le câble est ainsi mouflé d'une poulie à l'autre depuis son extrémité 64 jusqu'à la prise 62. De préférence, les poulies 83 et 85 comportent chacune une gorge périphérique de guidage du câble 6.

Dans l'exemple de la figure 2, le mouflage est composé de trois poulies 83, mobiles en rotation indépendamment les unes des autres autour de l'axe 86 et qui définissent un moufle fixe, et de trois poulies 85, également mobiles en rotation indépendamment les unes des autres autour de l'axe 88 et qui définissent un moufle mobile en translation par rapport au boîtier.

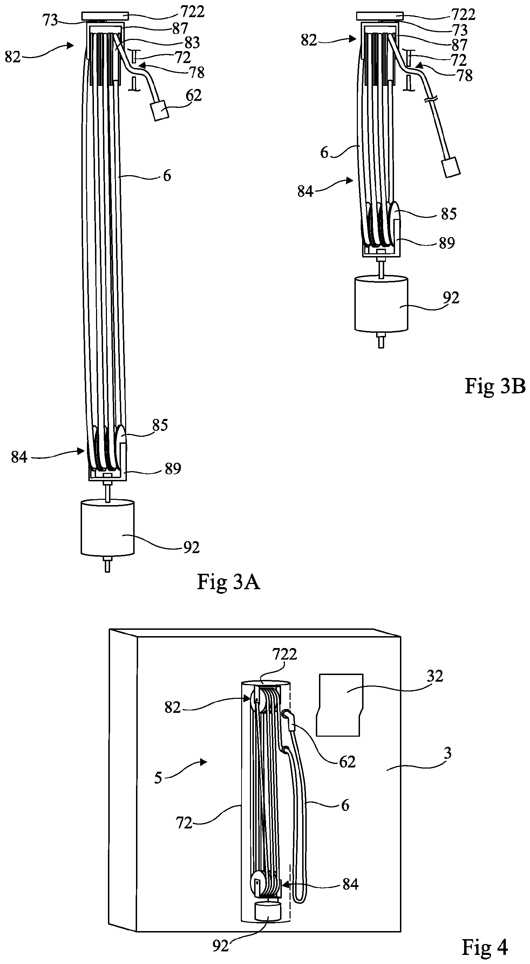

Les figures 3A et 3B sont des vues schématiques illustrant le fonctionnement du système de raccordement de la figure 2. La figure 3A illustre une situation dans laquelle le câble 6 est rangé. La figure 3B illustre le cas où le câble est dévidé (partiellement) pour être branché sur le chargeur d'un véhicule.

Pour simplifier, le boîtier n'est pas intégralement représenté en figure 3A et 3B. On a simplement illustré schématiquement un morceau de paroi du boîtier 72 comportant, de préférence en partie haute, une ouverture 78 de sortie de l'extrémité libre 62 du câble 6.

Dans l'exemple des figures 3A et 3B, l'étrier bas 89 portant les poulies 85 est lesté, c'est-à-dire qu'un lest 92 tire l'étrier 89, donc la rangée basse 84, vers le bas. Dans un mode de réalisation simplifié, le lest est fourni par le poids de l'étrier 89.

Partant d'une position telle qu'illustrée en figure 3A où le câble 6 est rangé, lorsque qu'une traction externe est exercée par l'utilisateur sur l'extrémité 62 (la fiche), le câble est dévidé et la rangée 84 de poulies 85 basse remonte en direction de la rangée 82 de poulies 83 haute. La force de traction que l'utilisateur doit exercer est réduite grâce à la démultiplication opérée par le mouflage du câble. Lorsque la traction sur le câble 6 est relâchée (par exemple, lorsqu'il est débranché du véhicule), le poids de la rangée 84 de poulies basse, accru dans l'exemple des figures 3A et 3B par le lest 92, rappelle le câble à l'intérieur du boîtier et tracte la partie du câble 6 qui est à l'extérieur.

La figure 4 est une vue en perspective schématique d'un mode de réalisation d'un système 5 de raccordement dans un exemple d'environnement.

On suppose le cas d'une installation 3 de fourniture d'électricité de type station de recharge de batterie de véhicule automobile requérant un câble 6 de plusieurs mètres. L'extrémité interne (non visible en figure 4) du câble 6 est raccordée à un dispositif 32 de gestion de l'alimentation électrique. Comme l'illustre la figure 4, le dispositif de rangement 7 est placé approximativement verticalement, de préférence verticalement, sortie 78 de câble en haut.

De préférence, le boîtier 72 (donc l'ensemble du dispositif 7) est monté pivotant autour d'un axe approximativement vertical, de préférence vertical, ce qui permet d'orienter la sortie 78 vers le véhicule à recharger, limitant ainsi les frottements du câble. Selon une variante de réalisation l'articulation de pivotement autour d'un axe vertical est interne au dispositif de rangement 7. Par exemple, l'étrier 87 est monté pivotant autour d'un axe vertical 73 (figure 3A et 3B), porté par le couvercle 722 du boîtier.

Dans l'exemple de la figure 4, le boîtier 72 à la forme d'un cylindre dans lequel sont logées les rangées 82 et 84 de poulies, l'étrier 87 étant par exemple fixé à une paroi 722 (couvercle) bouchant le cylindre en partie haute. La rangée basse, ici également associée à un lest 92, est mobile en translation dans le cylindre 72 qui sert de guide. Le câble 6 est illustré en position rangée.

Plus le lest 92 est lourd, plus la vitesse d'entraînement du câble pour le ranger est importante. De plus, le poids du câble à l'intérieur du dispositif 7 participe à la traction, ce qui participe à accroitre la vitesse d'entraînement du câble vers l'intérieur au fur et à mesure du rangement.

Pour éviter une trop forte traction sur la fiche 62, un mode de réalisation non représenté prévoit un dispositif de blocage, par exemple à la manière d'un système à cliquet qui bloque la traction. Le cliquet est alors libéré par une commande de l'utilisateur quand il souhaite rembobiner le câble.

De préférence, on prévoit un système de frein qui évite un dispositif de blocage susceptible de dysfonctionnement mécanique. Plusieurs exemples de freins sont décrits ci-après.

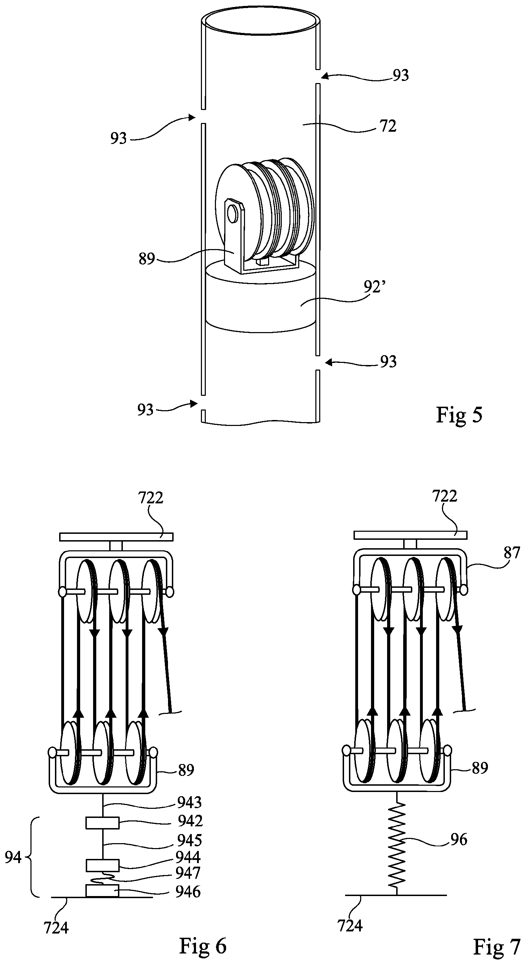

La figure 5 est une vue en perspective d'une partie du dispositif 7 de rangement de la figure 4, illustrant une partie du boîtier cylindrique 72 et la rangée basse 84 de poulies. Dans cet exemple, le lest 92' est un disque formant un piston dans le cylindre 72. Le cylindre en fermé en partie basse (fond non visible en figure 5. On utilise un effet de compression de l'air situé sous le lest 92' pour ralentir sa descente.

De préférence, des évents 93 sont répartis dans la paroi du tube cylindrique formant le boîtier 72. Ainsi, lors de la traction par l'utilisateur sur le câble 6 pour le dévider, la rangée basse 84 de poulies et le lest 92 remontent dans le tube et de l'air entre par les évents 93 dans le tube au fur et à mesure de la remontée. Lorsque la traction est relâchée, la taille des ouvertures (évents 93) conditionne la résistance à la descente du lest 92' et plus le lest descend, moins l'air peut sortir car le nombre d'évents disponibles diminue. On peut prévoir des clapets anti retour au niveau d'une partie des évents de façon à faciliter l'admission d'air dans le cylindre lors du dévidage du câble et de réduire les évents actifs lors de la descente du piston 92'. En variante, on prévoit une commande en ouverture d'une partie des évents pour la remontée du lest 92'.

La figure 6 illustre, par une vue à rapprocher de celle de la figure 2, une variante de réalisation dans laquelle le lest 94 est composé de plusieurs masses (au moins deux), par exemple trois masses 942, 944 et 946 reliées en chapelet, par exemple par des chaînes 943, 945 et 947 ou cordes, de longueur donnée. Ainsi, tant que toutes les masses sont en l'air, l'effet de traction vers le bas est maximum. Lorsque la masse 946 la plus basse touche le fond 724 du boîtier 72, son effet de lest disparait et seule le poids cumulé des deux masses 942 et 944 tracte le câble. Puis, quand la masse 944 rejoint la masse 946, seule la masse 942 participe à la fin de la traction. Cette variante permet de ralentir l'effet d'entraînement du câble 6 au fur et à mesure de son rangement afin de soulager l'utilisateur et d'éviter un effet d'emballement de l'enroulement. Elle permet de minimiser le dimensionnement du dispositif de frein, ou de supprimer le besoin de celui-ci.

La figure 7 illustre, par une vue à rapprocher de celle de la figure 2, une autre variante de réalisation dans laquelle le lest 92 est remplacé par un ressort 96 de rappel de l'étrier 89 vers le bas. Le ressort joue la fonction du ou des lests des modes de réalisation précédents. Un lest permet d'avoir une force proportionnelle à son allongement jusqu'à une limite correspondant à l'allongement maximum. On pourra également prévoir plusieurs ressorts en chapelet de forces différentes les uns des autres pour réduire la force de rappel au fur et à mesure du rangement du câble.

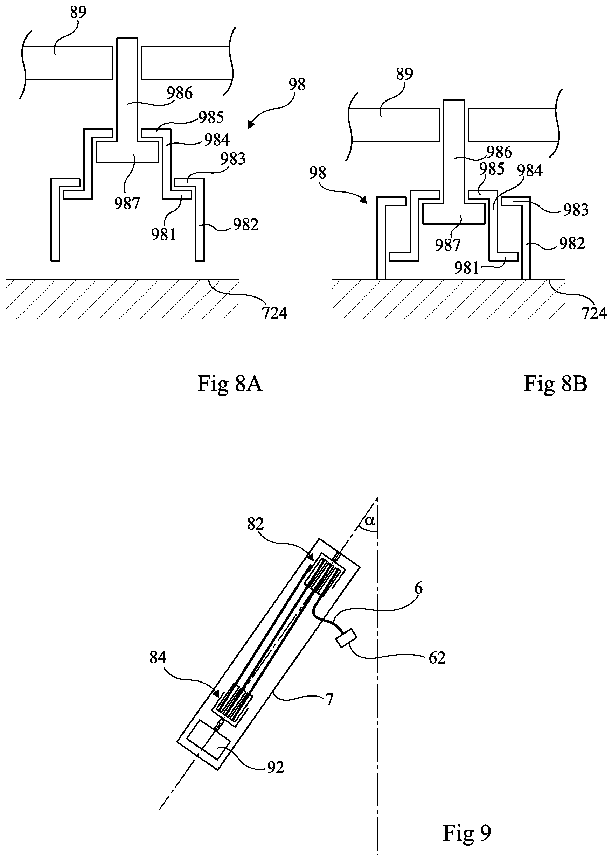

Les figures 8A et 8B représentent, dans deux positions différentes, des coupes d'un mode de réalisation particulier d'un lest 98 permettant de réduire l'effet d'entraînement du câble quand il se range. Le lest 98 est constitué de plusieurs tronçons 982 et 984 (deux dans cet exemple) coaxiaux et emboîtés autour d'une tige 986 de liaison à l'étrier 89. En figure 8A, on suppose que le lest 98 ne repose pas au sol ou au fond 724 du boîtier. Les tronçons 984 et 982 sont suspendus à la tige 986. Le tronçon 984 porte, par un épaulement interne supérieur 985, sur un épaulement externe 987 de l'extrémité basse de la tige 986. Le tronçon 982 porte, par un épaulement interne supérieur 983, sur un épaulement externe 981 inférieur 981 du tronçon 984. En figure 8B, on suppose une position intermédiaire dans laquelle le tronçon 982 repose au fond 724. L'épaulement 981 du tronçon 984 est libéré mais le tronçon 984 reste suspendu à la tige 986. En fin de mouvement, l'extrémité inférieure de la tige 986 repose au fond 724.

Selon un autre mode de réalisation non représenté, on combine lest et ressort en reliant le lest 92 (figures 3A, 3B et 4) à l'étrier 89 par un ressort et en limitant la course du lest 92 vers le haut. Ainsi, lors de la sortie du câble, quand le lest atteint sa butée, le ressort s'arme. Puis quand le câble est relâché, le ressort exerce d'abord seul une traction sur le câble pour le ranger. Au fur et à mesure que le câble est rangé, la traction sur le câble baisse. Lorsque cette force de rappel atteint le poids du lest, celui-ci quitte sa position haute et commence à descendre. La fin de la traction est alors seulement due au lest.

La figure 9 illustre, de façon schématique, une autre variante selon laquelle le dispositif 7 est incliné par rapport à la verticale. L'angle α d'inclinaison est, de préférence, inférieur à 45 degrés. Le dispositif 7 est de préférence approximativement vertical, ou vertical.

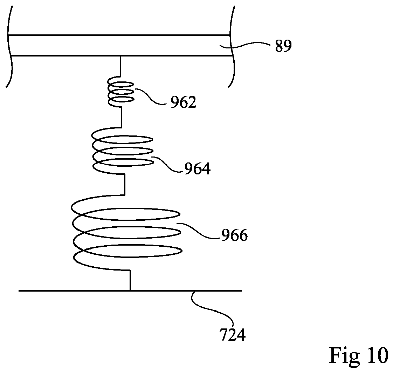

La figure 10 illustre un autre mode de réalisation d'un chapelet d'éléments de retenue et de retour, pour réduire l'effet d'entraînement du câble quand il se range. Selon ce mode de réalisation, l'étrier 89 est relié au fond 724 du boîtier par plusieurs ressorts (trois ressorts 962, 964 et 966 dans l'exemple de la figure 10) en chapelet ayant des duretés différentes. Les ressorts sont agencés pour qu'au fur et à mesure que le câble se range, la force de rappel diminue évitant ainsi un effet d'entraînement trop important du câble vers la fin du rembobinage. Ainsi, ces ressorts jouent le rôle du chapelet de lests des figures 8A et 8B en exerçant une force de retenue croissante avec l'allongement (le dévidage) du câble et une force de retour décroissante au fur et à mesure du rangement du câble. Le cas échéant, les ressorts sont associés à des câbles de limitation de la longueur des ressorts.

Quel que soit le mode de réalisation, le nombre de poulies dépend de la longueur du câble et de la hauteur du dispositif 7 qui conditionne l'entraxe entre les rangées de poulies du mouflage. Le nombre de poulies dans chaque rangée est, de préférence identique, mais peut en variante différer d'une unité (par exemple, deux poulies en haut et une poulie en bas).

A titre d'exemple particulier de réalisation, les dimensions du dispositif 7 sont les suivantes :
- Hauteur comprise entre 60 cm et 2 m ;
- Entraxe entre poulies hautes et basses compris entre 50 cm et 1,7 m ;
- Diamètre du boîtier cylindrique compris entre 10 cm et 40 cm ;
- Diamètre des poulies compris entre 8 cm et 30 cm, choisi de préférence en fonction du diamètre de courbure du câble ;

A titre d'exemple particulier de réalisation, le câble a une longueur comprise entre environ 4 mètres et environ 9 mètres. La section du câble est comprise, par exemple, entre environ 0,5 cm2 et environ 1,5 cm2.

Un avantage du système décrit ci-dessus est que le câble 6 n'est jamais replié sur lui-même, même en cas de dévidage partiel. Ainsi, on limite les risques d'échauffement. L'air présent dans le boîtier participe en outre au refroidissement du câble.

Un autre avantage est que le câble 6 possède un point fixe à son extrémité 64. Ainsi, il n'est pas nécessaire de prévoir des contacts glissants et la liaison électrique du câble 6 à l'installation de fourniture d'électricité est simplifiée.

Un autre avantage est que le câble ne traine pas par terre à l'extérieur et reste donc propre.

Un autre avantage est que la force de traction exercée sur la fiche et sur la prise de raccordement est, en particulier par rapport à un enrouleur à ressort, limitée lors de la phase de charge.

Dans les modes de réalisation ci-dessous, on prévoit d'utiliser un câble droit. On pourra cependant également utiliser un câble hélicoïdal ou spiralé. Cela permet de bénéficier d'un effet ressort supplémentaire du câble vers une position de repos où il est ramassé sur lui-même, cet effet ressort étant armé par l'étirage du câble pour son branchement. De plus, un câble hélicoïdal participe à réduire les problèmes thermiques liés à la dissipation de chaleur lors de l'utilisation du câble.

Divers modes de réalisation qui sont combinables ont été décrits. Diverses variantes et modifications apparaîtront à l'homme de l'art. En particulier, le passage du câble d'une rangée à l'autre peut s'effectuer sans croisement (figures 3A, 3B et 4), les poulies des deux rangées tournant alors dans le même sens, ou avec croisement (figures 2, 6 et 7), les rangées de poulies tournant alors en sens inverse. Par ailleurs, la mise en oeuvre pratique des modes de réalisation qui ont été décrits est à la portée de l'homme de métier à partir des indications fonctionnelles données ci-dessus. En particulier, la détermination des forces de rappel à exercer sur le câble, que ce soit par des lests, des ressorts, des évents, etc., dépend notamment de la longueur et de la section du câble ainsi que du nombre de poulies.

## Revendications

1. Dispositif de rangement pour câble électrique (6), comportant :
un boîtier (72) ;
au moins trois poulies (83, 85), réparties en deux rangées, respectivement haute (82) et basse (84) logées dans le boîtier, la rangée haute étant fixe par rapport au boîtier et la rangée basse étant mobile en translation avec un angle par rapport à la verticale inférieur à 45 degrés ; et
un chapelet d'éléments (982, 984, 986 ; 962, 964, 966) relié à la rangée basse et exerçant une force de retenue croissante avec l'allongement du câble et une force de retour décroissante au fur et à mesure du rangement du câble, lesdits éléments étant des ressorts (962, 964, 966) ayant des duretés différentes, reliés en chapelet.

2. Dispositif selon la revendication 1, dans lequel le mouvement de translation est approximativement vertical, de préférence vertical.

3. Dispositif selon la revendication 1 ou 2, dans lequel le mouvement de translation est rectiligne.

4. Dispositif selon l'une quelconque des revendications 1 à 3, dans lequel les poulies (83, 85) de chaque rangée (82, 84) sont coaxiales et mobiles en rotation individuellement.

5. Dispositif selon l'une quelconque des revendications 1 à 4, dans lequel chaque rangée (82, 84) comporte un axe (86, 88) commun aux poulies (83, 85) de la rangée concernée.

6. Dispositif selon l'une quelconque des revendications 1 à 5, dans lequel la rangée de poulies basse coulisse verticalement dans le boîtier.

7. Dispositif selon la revendication 6, dans lequel la rangée basse (84) est liée à un fond (724) du boîtier (72) par lesdits ressorts (962, 964, 966).

8. Dispositif selon l'une quelconque des revendications 1 à 7, dans lequel la rangée haute (82) et/ou le dispositif entier pivotent autour d'un axe vertical (73).

9. Dispositif selon l'une quelconque des revendications 1 à 8, dans lequel le câble est un câble de recharge de batterie d'un véhicule électrique.

10. Système (5) de raccordement électrique, comportant :
un câble électrique (6) ; et
un dispositif (7) de rangement du câble selon l'une quelconque des revendications 1 à 9.

11. Système selon la revendication 10, dans lequel le câble (6) passe successivement d'une poulie d'une rangée (84) à une poulie de l'autre rangée (82).

12. Système selon la revendication 10 ou 11, dans lequel :
une première extrémité (64) du câble (6) est fixe par rapport au dispositif de rangement (7) ; et
une seconde extrémité (62) du câble est libre et sort du boîtier (72) du dispositif de rangement par une ouverture (78).

13. Système selon l'une quelconque des revendications 10 à 12, dans lequel chaque poulie (83, 85) comporte une gorge périphérique externe d'une largeur supérieure au diamètre extérieur du câble (6).

14. Système selon l'une quelconque des revendications 10 à 13, dans lequel le câble (6) a une longueur comprise entre environ 4 mètres et environ 9 mètres et une section comprise entre environ 0,5 cm2 et environ 1,5 cm2.

## Patentansprüche

1. Eine Speichervorrichtung für ein elektrisches Kabel (6), umfassend:
eine Packung (72);
mindestens drei Rollen (83, 85), die in zwei Reihen verteilt sind, die jeweils höher (82) und niedriger (84) in der Packung untergebracht sind, wobei die höhere Reihe in Bezug auf die Packung fest ist und die untere Reihe in Translation mit einem Winkel relativ zur vertikalen Richtung beweglich ist, der kleiner als 45 Grad ist; und
eine Kette von Elementen (982, 984, 986; 962, 964, 966), die mit der unteren Reihe verbunden sind und eine mit der Länge des Kabels zunehmende Haltekraft und eine mit der Lagerung des Kabels abnehmende Rückstellkraft ausüben, wobei die Elemente in einer Reihe angeordnete Federn (962, 964, 966) mit unterschiedlicher Steifigkeit sind.

2. Vorrichtung nach Anspruch 1, wobei die Translationsbewegung annähernd senkrecht, vorzugsweise vertikal, erfolgt.

3. Vorrichtung nach Anspruch 1 oder 2, wobei die Translationsbewegung geradlinig ist.

4. Vorrichtung nach einem der Ansprüche 1 bis 3, wobei die Rollen (83, 85) jeder Reihe (82, 84) koaxial und einzeln drehbar sind.

5. Vorrichtung nach einem der Ansprüche 1 bis 4, wobei jede Reihe (82, 84) eine Achse (86, 88) aufweist, die für die Rollen (83, 85) der betreffenden Reihe gemeinsam ist.

6. Vorrichtung nach einem der Ansprüche 1 bis 5, wobei die untere Reihe von Rollen vertikal in der Packung gleitet.

7. Vorrichtung nach Anspruch 6, wobei die untere Reihe (84) durch die genannten Federn (962, 964, 966) mit einem Boden (724) der Packung (72) verbunden ist.

8. Vorrichtung nach einem der Ansprüche 1 bis 7, wobei die höhere Reihe (82) und/oder die gesamte Vorrichtung um eine vertikale Achse (73) schwenkt.

9. Vorrichtung nach einem der Ansprüche 1 bis 8, wobei das Kabel ein Kfz-Batterieladekabel ist.

10. Ein elektrisches Verbindungssystem (5), umfassend:
ein elektrisches Kabel (6); und
das Kabelspeichergerät (7) gemäß einem der Ansprüche 1 bis 9.

11. System nach Anspruch 10, wobei das Kabel (6) nacheinander von einer Rolle einer Reihe (84) zu einer Rolle der anderen Reihe (82) läuft.

12. System nach Anspruch 10 oder 11, wobei:
ein erstes Ende (64) des Kabels (6) in Bezug auf die Speichervorrichtung (7) befestigt ist; und
ein zweites Ende (62) des Kabels frei ist und durch eine Öffnung (78) aus der Packung (72) des Speichergeräts herauskommt.

13. System nach einem der Ansprüche 10 bis 12, wobei jede Rolle (83, 85) eine äußere Umfangsrille mit einer Breite aufweist, die größer ist als der Außendurchmesser des Kabels (6).

14. System nach einem der Ansprüche 10 bis 13, wobei das Kabel (6) eine Länge im Bereich von etwa 4 m bis etwa 9 m und eine Querschnittsfläche im Bereich von etwa 0,5 cm² bis etwa 1,5 cm² aufweist.

## Claims

1. A storage device for an electric cable (6), comprising:
a package (72);
at least three pulleys (83, 85), distributed in two rows, respectively higher (82) and lower (84) housed in the package, the higher row being fixed with respect to the package and the lower row being mobile in translation with an angle relative to the vertical direction smaller than 45 degrees; and
a chain of elements (982, 984, 986; 962, 964, 966) coupled to the lower row and exerting a holding force increasing as the cable lengthens and a restoring force decreasing as the cable is being stored, said elements being chained springs (962, 964, 966) having different stiffnesses.

2. The device according to claim 1, wherein the translation motion is approximately vertical, preferably vertical.

3. The device according to claim 1 or 2, wherein the translation motion is rectilinear.

4. The device according to any of claims 1 to 3, wherein the pulleys (83, 85) of each row (82, 84) are coaxial and individual rotatable.

5. The device according to any of claims 1 to 4, wherein each row (82, 84) comprises an axis (86, 88) common to the pulleys (83, 85) of the concerned row.

6. The device according to any of claims 1 to 5, wherein the lower row of pulleys slides vertically in the package.

7. The device according to claim 6, wherein the lower row (84) is linked to a bottom (724) of the package (72) by said springs (962, 964, 966) .

8. The device according to any of claims 1 to 7, wherein the higher row (82) and/or the entire device pivot around a vertical axis (73).

9. The device according to any of claims 1 to 8, wherein the cable is a motor vehicle battery charge cable.

10. An electric connection system (5), comprising:
an electric cable (6); and
the cable storage device (7) according to any of claims 1 to 9.

11. The system according to claim 10, wherein the cable (6) successively passes from one pulley of a row (84) to a pulley of the other row (82).

12. The system according to claim 10 or 11, wherein:
a first end (64) of the cable (6) is fixed with respect to the storage device (7); and
a second end (62) of the cable is free and comes out of the package (72) of the storage device through an opening (78).

13. The system according to any of claims 10 to 12, wherein each pulley (83, 85) comprises an external peripheral groove having a width greater than the external diameter of the cable (6).

14. The system according to any of claims 10 to 13, wherein the cable (6) has a length in the range from approximately 4 meters to approximately 9 meters and a cross-section area in the range from approximately 0.5 cm2 to approximately 1.5 cm2
